# EUROPEAN PATENT APPLICATION

(11) **EP 3 841 898 A1**
(43) Date of publication of application: **30.06.2021**
(21) Application number: 19851724.5
(22) Date of filing: 19.08.2019
(51) Int. Cl.: A24F 47/00

(54) **CONTROL CIRCUIT AND ELECTRONIC CIGARETTE**

(30) Priority: 20.08.2018 CN 201821346258 U
(71) Applicant: Changzhou Patent Electronic Technology Co., Ltd, Changzhou, Jiangsu 213022 (CN)
(72) Inventor: QIU, Weihua, Changzhou, Jiangsu 213125 (CN); FAN, Guimei, Changzhou, Jiangsu 213125 (CN)
(74) Representative: Zaboliene, Reda
(86) International application number: PCT/CN2019/101326
(87) International publication number: WO 2020/038320

(57) **Abstract**

Disclosed are a control circuit and an electronic cigarette, relating to the technical field of simulated smoking. The control circuit comprises a voltage transformation device (10), a battery (30) and an electronic control element (20), wherein the battery (30) is electrically connected with a voltage input end of the voltage transformation device (10), and a voltage output end of the voltage transformation device (10) is electrically connected with an atomizer (40); the electronic control element (20) is electrically connected with the voltage transformation device (10); the voltage transformation device (10) controls, according to a voltage transformation signal provided by the electronic control element (20), a voltage transformation mode of the voltage transformation device (10) and performs voltage transformation, such that the voltage output end of the voltage transformation device (10) outputs a target voltage, and the voltage transformation mode supported by the voltage transformation device (10) at least comprises a boosting mode. The technical solution solves the problem in the related technology that the smoking taste of the electronic cigarette is affected due to reduction of heating power of the atomizer (40) caused by reduction of battery voltage in the use of the electronic cigarette.

## Description

### TECHNICAL FIELD

The disclosure relates to the technical field of smoking simulation, and more particularly, relates to a control circuit and an electronic cigarette.

### BACKGROUND OF THE INVENTION

As a substitute for cigarettes, electronic cigarettes are becoming more and more popular in the market due to their safety, convenience, health, and environmental protection to a certain extent.

At present, most of the batteries in electronic cigarettes on the market are loaded onto the heating elements in the atomizing assembly by direct output. During the use of the electronic cigarette, the output voltage of the battery will drop, resulting in a decrease in the heating power of the atomizer, which affects the smoking taste of the electronic cigarette.

### SUMMARY OF THE INVENTION

In order to solve the problem that the heating power of the atomizer decreases due to the decrease of the battery voltage during the use of the electronic cigarette in the related art, and the smoking taste of the electronic cigarette is affected, an embodiment of the present invention provides a control circuit and an electronic cigarette. The technical solutions are as follows:

In one aspect, an embodiment of the present invention provides a control circuit, which includes a voltage transformation device, a battery and an electronic control component, wherein:
the battery is electrically connected to a voltage input terminal of the voltage transformation device, and a voltage output terminal of the voltage transformation device is electrically connected to an atomizer;
the electronic control component is electrically connected to the voltage transformation device, the voltage transformation device controls, according to a voltage transformation signal provided by the electronic control component, a voltage transformation mode of the voltage transformation device and performs voltage transformation, such that the voltage output terminal of the voltage transformation device outputs a target voltage;
the voltage transformation mode provided by the voltage transformation device includes at least a step-up mode.

In one embodiment, the voltage transformation device includes a step-up circuit; or, the voltage transformation mode provided by the voltage transformation device further includes a step-down mode, and the voltage transformation device includes a step-up circuit and a step-down circuit.

In one embodiment, the step-down circuit is a buck converter, and/or, the step-up circuit is a boost converter.

In one embodiment, the voltage transformation device is a chip integrated with a buck converter and a boost converter.

In one embodiment, the control circuit further includes a voltage detection device for detecting the voltage of the battery, wherein:
the voltage detection device is connected to the electronic control component;
the control terminal of the voltage transformation device is connected to the electronic control component;
the electronic control component is used to control the voltage transformation device to transform the voltage of the battery into the target voltage.

In one embodiment, the electronic control component is used to generate the voltage transformation signal according to the voltage of the battery and the target voltage.

In one embodiment, the electronic control component is further used for:
during the cigarette lighting process, acquiring at least one detection value detected by the voltage detection device;
during the next cigarette lighting process, controlling the voltage transformation device to transform the voltage of the battery according to the at least one detection value, such that the voltage output terminal outputs the target voltage.

In one embodiment, the control circuit further includes a suction detection device, the suction detection device is electrically connected to the electronic control component, wherein:
the electronic control component is used to control the voltage output terminal of the voltage transformation device to output the target voltage when the suction detection device detects a suction signal.

In one embodiment, the electronic control component is further used to control the voltage output terminal of the voltage transformation device to output a holding voltage when the suction detection device does not detect the suction signal, the holding voltage is lower than the target voltage, the holding voltage is determined by the electronic control component according to a target holding power of the atomizer and a resistance value of the atomizer.

In one embodiment, the control circuit further includes a resistance value detection device for detecting the resistance value of the atomizer, the resistance value detection device is connected to the electronic control component; or,
the control circuit further includes a temperature detection device for detecting the temperature of a heating element in the atomizer, and the electronic control component further determines the resistance value of the atomizer according to a temperature change curve detected by the temperature detection device.

The beneficial effects brought about by the technical solution provided by the embodiment of the invention are:
By providing a control circuit and an electronic cigarette, wherein the control circuit includes a voltage transformation device, a battery and an electronic control component, wherein the battery is electrically connected to the voltage input terminal of the voltage transformation device, the voltage output terminal of the voltage transformation device is electrically connected to the atomizer; the electronic control component is electrically connected to the voltage transformation device, the voltage transformation device controls, according to the voltage transformation signal provided by the electronic control component, the voltage transformation mode of the voltage transformation device and performs voltage transformation, such that the voltage output terminal of the voltage transformation device outputs the target voltage; the voltage transformation mode provided by the voltage transformation device include at least a step-up mode. Since the working voltage of the atomizer is maintained at a fixed target voltage, the atomizer performs atomization with a constant working power, which solves the problem of the decrease in the heating power of the atomizer caused by the decrease of the battery voltage during the use of the electronic cigarette in the related art, and the problem of affecting the smoking taste of the electronic cigarette, to achieve the effect of improving the user's smoking experience during the use of the electronic cigarette.

### BRIEF DESCRIPTION OF THE DRAWINGS

In order to more clearly explain the technical solutions in the embodiments of the present invention, the drawings required in the description of the embodiments will be briefly introduced below. Obviously, the drawings in the following description are only some embodiments of the present invention. For those of ordinary skill in the art, without paying any creative work, other drawings can be obtained based on these drawings.
FIG. 1 is a schematic diagram of the connection of multiple components in a control circuit provided by an exemplary embodiment of the present invention;
FIG. 2 is a schematic diagram of the connection of multiple components in another control circuit provided by an exemplary embodiment of the present invention.

### DETAILED DESCRIPTION OF PREFERRED EMBODIMENTS

In order to make the objectives, technical solutions, and advantages of the present invention clear, the following describes the embodiments of the present invention in further detail with reference to the accompanying drawings.

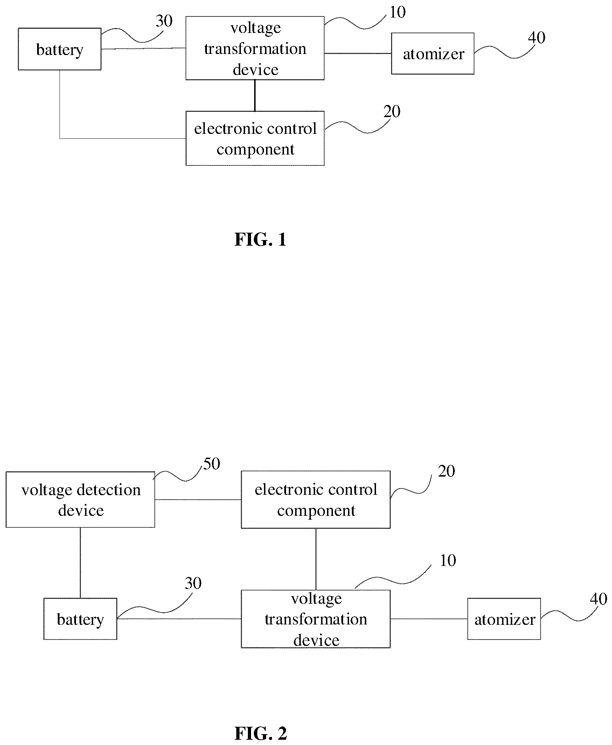

Please refer to FIG. 1, which is a schematic diagram of the connection of multiple components of a control circuit provided by an exemplary embodiment of the present invention. As shown in FIG. 1, the control circuit includes a voltage transformation device 10, an electronic control component 20 and a battery 30, wherein:
the battery 30 is electrically connected to a voltage input terminal of the voltage transformation device 10, and a voltage output terminal of the voltage transformation device 10 is electrically connected to an atomizer 40;
the electronic control component 20 is electrically connected to a control terminal of the voltage transformation device 10, the voltage transformation device 10 controls, according to a voltage transformation signal provided by the electronic control component 20, a voltage transformation mode of the voltage transformation device 10 and performs voltage transformation, such that the voltage output terminal of the voltage transformation device 10 outputs a target voltage to the atomizer 40;
the battery 30 is electrically connected to the electronic control component 20 to supply power to the electronic control component 20.

Optionally, the target voltage is determined by the electronic control component 20 according to a target constant working power of the atomizer 40 and a resistance value of the atomizer 40.

It should be noted that the electronic control component 20 may be a controller, or may be composed of multiple control elements, which is not specifically limited in this embodiment.

In addition, the relationship between the target constant working power P and the target voltage U is: U²=P*R, R is the resistance value of the atomizer 40. The voltage transformation device 10 includes a step-up circuit, or the voltage transformation device 10 includes a step-up circuit and a step-down circuit. Optionally, the step-up circuit involved in this application may specifically be a boost converter, and the step-down circuit involved in this application may specifically be a buck converter.

In other words, the voltage transformation mode provided by the voltage transformation device 10 includes a step-up mode, and may also include a step-down mode.

The embodiment of the present invention provides a control circuit in which the battery 30 is electrically connected to the voltage input terminal of the voltage transformation device 10, the voltage output terminal of the voltage transformation device 10 is electrically connected to the atomizer 40, the voltage output terminal outputs the target voltage, which solves the problem of the decrease in the heating power of the atomizer caused by the decrease of the battery voltage during the use of the electronic cigarette in the related art, and the problem of affecting the smoking taste of the electronic cigarette, to achieve the effect of improving the user's smoking experience during the use of the electronic cigarette.

The functions of the voltage transformation device 10 are described in two situations as follows.

In the first situation, the target voltage is higher than a full charge voltage of the battery 30, the voltage transformation device 10 may only include a step-up circuit to increase the voltage provided by the battery 30 to the target voltage to be supplied to the atomizer 40.

In actual implementation, when the target voltage is higher than the full charge voltage of the battery 30, the voltage transformation device 10 may also include a step-up circuit and a step-down circuit.

In the second situation, when the target voltage may be lower than the full charge voltage of the battery 30, the voltage transformation device 10 includes a step-up circuit and a step-down circuit. When the voltage of the battery 30 is higher than the target voltage, the voltage provided by the battery 30 is reduced to the target voltage by the step-down function of the voltage transformation device 10 and supplied to the atomizer 40; when the voltage of the battery 30 is lower than the target voltage, the voltage provided by the battery 30 is increased to the target voltage by the step-up function of the voltage transformation device 10 and supplied to the atomizer 40.

Optionally, the voltage transformation device 10 is a chip integrated with a buck converter and a boost converter, such as LTC3785 chip.

In an example, as shown in FIG. 2, the control circuit further includes a voltage detection device 50 for detecting the voltage of the battery 30, wherein the electronic control component 20 is used to control the voltage transformation device 10 to transform the voltage of the battery 30 into the target voltage.

The specific implementation may be: a data terminal of the voltage detection device 50 is connected to the electronic control component 20; the control terminal of the voltage transformation device 10 is connected to the electronic control component 20; the electronic control component 20 is used to determine and generate the voltage transformation signal according to the voltage of the battery 30 detected by the voltage detection device 50 and the target voltage.

Specifically, the realization of the electronic control component 20 determining and generating the voltage transformation signal according to the voltage of the battery 30 and the target voltage may be: the electronic control component 20 acquires at least one detection value detected by the voltage detection device 50 during the cigarette lighting process; during the next cigarette lighting process, the electronic control component 20 controls the voltage transformation device 10 to transform the voltage of the battery 30 according to the at least one detection value, such that the voltage output terminal outputs the target voltage.

Optionally, the electronic control component 20 may determine a target transformation ratio according to the voltage of the battery 30 and the target voltage, and then generate the voltage transformation signal according to the target transformation ratio. For example, the electronic control component 20 acquires at least one detection value detected by the voltage detection device 50 during the cigarette lighting process; the electronic control component 20 determines the target transformation ratio of the voltage transformation device 10 in the next cigarette lighting process according to the at least one detection value; the electronic control component 20 generates the voltage transformation signal in the next cigarette lighting process according to the target transformation ratio to control the voltage transformation device 10 to transform the voltage of the battery 30 according to the target transformation ratio, such that the voltage output terminal outputs the target voltage.

Optionally, the electronic control component 20 determines a reference voltage value of the battery 30 during the next cigarette lighting process according to the at least one detection value, and obtains the target transformation ratio of the voltage transformation device 10 during the next cigarette lighting process by calculating the ratio of the target voltage to the reference voltage value.

Optionally, the determination of the reference voltage value of the battery 30 according to the at least one detection value can be implemented in the following two methods:

The first method is to use the minimum value of the at least one detection value to obtain the reference voltage value of the atomizer 40 during the current working process.

The second method is to use the minimum value of the at least one detection value plus a constant to obtain the reference voltage value of the atomizer 40 during the current working process. In other words, the voltage of the battery 30 is frequently detected during one puff, and at least one detected value is stored. Among them, the smaller voltage detection value tends to be the voltage value when the battery supplies power to the atomizer 40. Considering the fluctuation and short-term recovery of the voltage of the battery 30, the minimum value plus the constant is used to obtain the reference voltage value of the atomizer 40 during the next working process, wherein the constant is usually set by the system developer, for example, the constant can be 200mV.

In this application, the voltage detection device 50 is independent of the electronic control component 20 and the voltage transformation device 10 as an example. The voltage detection device 50 includes an analog to digital converter (ADC) that outputs a value representing the actual voltage of the battery 30, and the ADC is connected to the electronic control component 20. In actual implementation, the voltage detection device 50 can be integrated into the electronic control component 20 or the voltage transformation device 10.

In addition, the resistance value of the atomizer 40 can be obtained in the following three methods:

In the first method, the control circuit further includes a resistance value detection device for detecting the resistance value of the atomizer 40, and a signal terminal of the resistance value detection device is connected to the electronic control component 20.

In the second method, the control circuit further includes a temperature detection device for detecting the temperature of a heating element in the atomizer 40, and the electronic control component 20 further determines the resistance value of the atomizer 40 according to a temperature change curve detected by the temperature detection device.

Optionally, the realization of determining the resistance value of the atomizer according to the temperature change curve may be: a temperature change coefficient is determined according to the temperature change curve, and a resistance value corresponding to the temperature change coefficient is obtained as the resistance value of the atomizer, wherein the corresponding relationship between the temperature change coefficient and the resistance value of the atomizer can be stored in a memory connected to the controller 20 in the form of a table, a curve, or the like.

In the third method, a reference resistance value of the atomizer 40 is stored in the electronic cigarette, and the reference resistance value is determined as the resistance value of the atomizer 40.

Optionally, the control circuit further includes a suction detection device, and the suction detection device is electrically connected to the electronic control component 20. The electronic control component 20 is used to control the voltage output terminal of the voltage transformation device 10 to output the target voltage to the atomizer 40 when the suction detection device detects a suction signal.

Specifically, the suction detection device may be an airflow sensor in the electronic cigarette or a mechanical switch. Therefore, the suction signal can be the airflow signal detected by the airflow sensor, the operation signal generated when the mechanical switch is operated, or the pressure signal detected by a pressure sensor (for example, the pressure value detected by the pressure sensor is higher than a predetermined value).

Optionally, the electronic control component 20 is further used to control the voltage output terminal of the voltage transformation device 10 to output a holding voltage when the suction detection device does not detect the suction signal. The holding voltage is lower than the target voltage, and the holding voltage is determined by the electronic control component 20 according to a target holding power of the atomizer 40 and the resistance value of the atomizer 40. The specific implementation may be: adjusting the transformation ratio of the voltage transformation device 10 such that the transformation ratio of the voltage transformation device 10 is the ratio of the holding voltage U₀ to the reference voltage value of the battery voltage.

Specifically, the relationship between the holding voltage U0 and the target holding power P0 is: U₀²=P₀*R, and R is the resistance value of the atomizer 40.

Optionally, the control circuit further includes a resistance value detection device for detecting the resistance value of the atomizer 40, and the signal terminal of the resistance value detection device is connected to the electronic control component 20, such that the electronic control component 20 determines the target voltage and/or the holding voltage according to the resistance value of the atomizer 40 detected by the resistance value detection device.

In addition, in actual implementation, the resistance value detection device can be integrated in the electronic control component 20; of course, it can also be independent of the electronic control component 20.

The present application further provides an electronic cigarette, which includes the control circuit and the atomizer involved in any of the above embodiments.

Those of ordinary skill in the art can understand that all or part of the steps in the foregoing embodiments can be implemented by hardware, or by a program instructing related hardware to be completed. The program can be stored in a computer-readable storage medium. The storage medium mentioned can be a read-only memory, a magnetic disk or an optical disk, etc.

The embodiments described above are merely preferred embodiments, but not intended to limit the application. Any modifications, alternatives or improvements made within the principle and spirit of the present application should be interpreted as falling within the protection scope of the present application. The claims are not limited to the features or acts described above. Rather, the proper scope of the disclosure is defined by the appended claims.

## Claims

1. A control circuit, comprising a voltage transformation device, a battery and an electronic control component, wherein:
the battery is electrically connected to a voltage input terminal of the voltage transformation device, and a voltage output terminal of the voltage transformation device is electrically connected to an atomizer;
the electronic control component is electrically connected to the voltage transformation device, the voltage transformation device controls, according to a voltage transformation signal provided by the electronic control component, a voltage transformation mode of the voltage transformation device and performs voltage transformation, such that the voltage output terminal of the voltage transformation device outputs a target voltage;the voltage transformation mode provided by the voltage transformation device comprises at least a step-up mode.

2. The control circuit according to claim 1, wherein the voltage transformation device comprises a step-up circuit; or, the voltage transformation mode provided by the voltage transformation device further comprises a step-down mode, and the voltage transformation device comprises a step-up circuit and a step-down circuit.

3. The control circuit according to claim 2, wherein the step-down circuit is a buck converter, and/or, the step-up circuit is a boost converter.

4. The control circuit according to claim 1, wherein the voltage transformation device is a chip integrated with a buck converter and a boost converter.

5. The control circuit according to claim 1, wherein the control circuit further comprises a voltage detection device for detecting the voltage of the battery, wherein:
the voltage detection device is connected to the electronic control component;
the control terminal of the voltage transformation device is connected to the electronic control component;
the electronic control component is used to control the voltage transformation device to transform the voltage of the battery into the target voltage.

6. The control circuit according to claim 5, wherein the electronic control component is used to generate the voltage transformation signal according to the voltage of the battery and the target voltage.

7. The control circuit according to claim 5, wherein the electronic control component is further used for:
during the cigarette lighting process, acquiring at least one detection value detected by the voltage detection device;
during the next cigarette lighting process, controlling the voltage transformation device to transform the voltage of the battery according to the at least one detection value, such that the voltage output terminal outputs the target voltage.

8. The control circuit according to claim 1, wherein the control circuit further comprises a suction detection device, the suction detection device is electrically connected to the electronic control component, wherein:
the electronic control component is used to control the voltage output terminal of the voltage transformation device to output the target voltage when the suction detection device detects a suction signal.

9. The control circuit according to claim 8, wherein the electronic control component is further used to control the voltage output terminal of the voltage transformation device to output a holding voltage when the suction detection device does not detect the suction signal, the holding voltage is lower than the target voltage, the holding voltage is determined by the electronic control component according to a target holding power of the atomizer and a resistance value of the atomizer.

10. The control circuit according to claim 1, wherein the control circuit further comprises a resistance value detection device for detecting the resistance value of the atomizer, the resistance value detection device is connected to the electronic control component; or,
the control circuit further comprises a temperature detection device for detecting the temperature of a heating element in the atomizer, and the electronic control component further determines the resistance value of the atomizer according to a temperature change curve detected by the temperature detection device.

11. An electronic cigarette comprising the control circuit according to any one of claims 1 to 10.
